# EUROPÄISCHE PATENTSCHRIFT

(11) **EP 1 995 499 B1**
(45) Veröffentlichungstag und Bekanntmachung des Hinweises auf die Patenterteilung: **16.04.2014**
(21) Anmeldenummer: 08155248.1
(22) Anmeldetag: 28.04.2008
(51) Int. Cl.: F16H 61/20

(54) **Verfahren zur Steuerung eines automatisierten Lastschaltgetriebes**
Method for controlling an automated power shift transmission
Procédé de commande d'une boîte de vitesse automatisée

(30) Priorität: 23.05.2007 DE 102007023957
(43) Veröffentlichungstag der Anmeldung: 26.11.2008
(73) Patentinhaber: ZF Friedrichshafen AG, 88038 Friedrichshafen (DE)
(72) Erfinder: Eisele, Markus, 88048 Friedrichshafen (DE); Nolzen, Harry, 88069 Tettnang (DE)

(56) Entgegenhaltungen:
- EP-A- 0 841 505
- DE-A1- 10 239 392
- DE-A1-102004 059 262
- DE-C1- 19 849 494

## Beschreibung

Die Erfindung betrifft ein Verfahren zur Steuerung eines automatisierten Lastschaltgetriebes, das im Antriebsstrang eines Kraftfahrzeugs zwischen einem Antriebsmotor und einem Achsantrieb angeordnet ist, dessen Eingangswelle über einen hydrodynamischen Drehmomentwandler mit der Antriebswelle des Antriebsmotors und dessen Ausgangswelle über eine Abtriebswelle mit dem Achsantrieb in Triebverbindung steht, und das mehrere Gänge aufweist, die jeweils durch das selektive Schließen von mindestens zwei von mehreren reibschlüssig wirksamen Schaltelementen schaltbar sind, wobei zur Standabkoppelung des Antriebsmotors ein dem momentan eingelegten Gang zugeordnetes, eingangsseitig angeordnetes erstes Schaltelement zumindest teilweise geöffnet wird, und zur Rollverhinderung des Kraftfahrzeugs ein mit einem dem eingelegten Gang zugeordneten, ausgangsseitig angeordneten zweiten Schaltelement und der Ausgangswelle in Triebverbindung stehendes drittes Schaltelement geschlossen wird.

Eine allgemein bekannte und weit verbreitete Bauart eines automatisierten Lastschaltgetriebes der vorbezeichneten Art ist der Planetengetriebeautomat, der in einer mehrstufigen Ausführungsform aus mehreren miteinander gekoppelten Planetenradsätzen besteht. Zur Schaltung eines bestimmten Gangs werden jeweils mindestens zwei reibschlüssig wirksame Schaltelemente geschlossen, wodurch ein bestimmtes Bauteil eines Planetenradsatzes über ein eingangsseitig angeordnetes erstes Schaltelement mit der Eingangswelle verbunden und ein anderes Bauteil desselben oder eines anderen Planetenradsatzes über ein ausgangsseitig angeordnetes zweites Schaltelement gegenüber dem Getriebegehäuse arretiert wird. Aus der Kombination des mit der Eingangswelle gekoppelten Bauteils und des gehäuseseitig abgestützten Bauteils ergibt sich der jeweils wirksame Gang, d.h. die Drehrichtung der Ausgangswelle sowie die zwischen der Eingangswelle und der Ausgangswelle wirksame Übersetzung des Lastschaltgetriebes.

Die genannten Schaltelemente sind üblicherweise als hydraulisch betätigbare Lamellenkupplungen bzw. Lamellenbremsen ausgebildet, deren Aktuatoren über zugeordnete Magnetsteuerventile angesteuert werden, wobei sich das wirksame Kupplungs- bzw. Bremsmoment jeweils proportional zu dem in dem zugeordneten Stellzylinder eingestellten Betätigungsdruck verhält.

Der Wechsel zwischen einem eingelegten Lastgang und einem einzulegenden Zielgang erfolgt ohne Zugkraftunterbrechung durch ein simultanes Öffnen der dem Lastgang zugeordneten Schaltelemente und das Schließen der dem Zielgang zugeordneten Schaltelemente. Zur Verringerung des Steuerungsaufwands werden der Aufbau der Planetenradsätze, deren Koppelung und die Anordnung der Schaltelemente bevorzugt derart ausgebildet, dass zum Wechsel zwischen zwei benachbarten Gängen jeweils nur ein Schaltelement geöffnet und nur ein Schaltelement geschlossen werden muss.

Ein dem Lastschaltgetriebe antriebstechnisch vorgelagerter hydrodynamischer Drehmomentwandler oder ersatzweise eine vorgeschaltete hydrodynamische Kupplung dient zum einen als Anfahrelement zur Überbrückung der beim Anfahren auftretenden Drehzahldifferenz zwischen der Antriebswelle des Antriebsmotors und der Eingangswelle des Lastschaltgetriebes sowie als Dämpfungselement zur Abschwächung der während der Schaltvorgänge auftretenden Laststöße.

Ohne weitere Maßnahmen wird bei Fahrzeugstillstand, laufendem Antriebsmotor und eingelegter Vorwärts- oder Rückwärtsfahrstufe (D, R) bei nicht betätigtem Fahrpedal ein relativ hohes Kriechmoment über den Drehmomentwandler von dem Antriebsmotor auf das Lastschaltgetriebe und von dort weiter an den Achsantrieb einer angetriebenen Achse übertragen. Das Kriechmoment bewirkt bei gelöster Fahrzeugbremse in der Ebene ein Rollen des Kraftfahrzeugs in die durch die eingelegte Fahrstufe vorgegebene Fahrtrichtung und verhindert selbst an geringen Fahrbahnsteigungen ein Zurückrollen des Kraftfahrzeugs, also ein Rollen entgegen der vorgegeben Fahrtrichtung. Aufgrund des vorhandenen Kriechmomentes kann ein Fahrer die Rollgeschwindigkeit, z.B. beim Einparken und Rangieren, auf einfache Weise über eine mehr oder weniger starke Betätigung des Bremspedals regulieren. Ebenfalls kann durch das Kriechmoment das Anfahren, insbesondere in der Phase zwischen dem Loslassen des Bremspedals und der Betätigung des Fahrpedals, wirksam unterstützt werden.

Nachteilig an einem hohen Kriechmoment ist jedoch der dadurch verursachte erhöhte Kraftstoffverbrauch und die damit verbundenen Schadstoffemissionen, was sich besonders ungünstig im Stadtverkehr mit häufigen Ampelstopps auswirkt. Da die Wirkung des zumeist nicht oder nicht in vollem Umfang benötigten Kriechmomentes jeweils mittels der Betriebsbremse kompensiert werden muss, tritt zudem ein erhöhter Verschleiß dieser Betriebsbremse auf. Auf glattem Untergrund, wie bei Schnee- und Eisglätte, kann es durch das Wegbremsen des Kriechmomentes sogar zu einem sicherheitsrelevanten Überbremsen und Blockieren der Räder der nicht-angetriebenen Achsen kommen. Ein weiteres Problem stellt die aufgrund des Kriechmomentes erhöhte Wärmeentwicklung in dem Antriebsmotor und in dem Drehmomentwandler dar, da die Wärme bei Fahrzeugstillstand oder bei geringer Fahrgeschwindigkeit nur unzureichend oder nur mit einem erhöhten Aufwand abgeführt werden kann. Des Weiteren kann sich bei einem hohen Kriechmoment bei Fahrzeugstillstand ein komfortminderndes Standruckeln einstellen. Den Vorteilen eines hohen Kriechmomentes stehen somit einige Nachteile gegenüber.

Aus diesem Grund liegen schon seit längerem Vorschläge zur Reduzierung des Kriechmomentes durch eine so genannte Standabkoppelung des Antriebsmotors vor. Entsprechende Verfahren sehen vor, dass bei Erfüllung bestimmter Eintrittsbedingungen, wie dem Loslassen des Fahrpedals, der Betätigung des Bremspedals und der Unterschreitung einer Mindestfahrgeschwindigkeit, mindestens eines der dem eingelegten Gang zugeordneten und in dieser Situation üblicherweise vollständig geschlossenen Schaltelemente, wie Schaltkupplungen und Schaltbremsen des Getriebes, zumindest teilweise geöffnet wird. Hierdurch wird das durch das Lastschaltgetriebe übertragene Drehmoment reduziert und demzufolge auch das durch den Drehmomentwandler übertragene und von dem Antriebsmotor aufzubringende Kriechmoment entsprechend abgesenkt. Mit der Erfüllung bestimmter Austrittsbedingungen, mit denen die Standabkoppelung des Antriebsmotors beendet wird, wie dem Loslassen des Bremspedals und der Betätigung des Fahrpedals, wird das zuvor geöffnete Schaltelement wieder geschlossen und damit das Kriechmoment auf einen Normalwert erhöht.

Verfahren und Vorrichtungen zur Steuerung der Standabkoppelung des Antriebsmotors sind auch unter den Begriffen NBS (neutral by standstill, Neutral bei Stillstand), AIS (automatic idle speed), ANS (automatic neutral at standstill = Automatische Neutral-Schaltung) und SBC (stand-by control) bekannt. So wird beispielsweise in der DE 101 12 949 A1 ein Verfahren zur Steuerung der Standabkoppelung eines Antriebsmotors vorgeschlagen, nach dem der Stelldruck bzw. der Öffnungsgrad des geöffneten Schaltelementes und damit die Höhe des Kriechmomentes in Abhängigkeit der Drehrichtung und der Drehzahl der Ausgangswelle des Lastschaltgetriebes geregelt wird. In einem weiteren bekannten Verfahren gemäß der DE 10 2005 027 098 A1 ist vorgesehen, dass das für die Standabkoppelung des Antriebsmotors vorgesehene Schaltelement schon bei einer höheren Fahrgeschwindigkeit geöffnet wird, wenn aufgrund erfüllter Anhaltebedingungen ein bevorstehendes Anhalten des Kraftfahrzeugs erkennbar ist. Weitere bekannte Vorrichtungen und Verfahren zur Steuerung der Standabkoppelung des Antriebsmotors gehen aus und den dort genannten Druckschriften hervor. So wird beispielsweise in der DE 103 47 714 A1 vorgeschlagen, dass die Funktion der Standabkopplung in Abhängigkeit von einer dynamischen Rad- oder Achslastveränderung des Kraftfahrzeugs gesteuert oder geregelt wird.

Damit ein Kraftfahrzeug bei aktivierter Standabkoppelung des Antriebsmotors an einer Steigung gehalten wird und nicht unkontrolliert zurückrollt, kann als Eintrittsbedingung zur Aktivierung der Standabkoppelung neben dem Fahrzeugstillstand auch eine ausreichende Betätigung der Betriebsbremse, also ein bestimmter Bremsdruck oder eine bestimmte Bremspedalstellung gefordert sein. Dies ist besonders zu Beginn der Standabkoppelung wichtig, da mit dem Öffnen des betreffenden Schaltelements das Kriechmoment wegfällt oder stark reduziert wird. Ist die von dem Fahrer über das Bremspedal erzeugte Bremswirkung in diesem Moment zu gering, kann das Kraftfahrzeug an einem steilen Berg zurückrollen. Das Zurückrollen des Kraftfahrzeugs kann für den Fahrer besonders überraschend auftreten, da der Zugkraftverlust nicht sofort bei Erreichen des Fahrzeugstillstands, sondern aufgrund des Öffnungsvorgangs des betreffenden Schaltelementes erst mit einer Verzögerung von bis zu 1,5 Sekunden eintritt.

Eine weitere Situation stellt das Anfahren am Berg dar, da der Fahrer hierzu das Bremspedal loslassen und auf das Fahrpedal wechseln muss, wobei das Loslassen des Bremspedals zumeist als Kriterium zur Beendigung der Standabkoppelung verwendet wird. Da das Schließen des zuvor für die Standabkoppelung geöffneten Schaltelementes aber eine gewisse Zeit in Anspruch nimmt, kann das Kraftfahrzeug in dieser Phase je nach Fahrbahnsteigung und Auslegung der Steuerungsvorrichtung mehr oder weniger weit zurückrollen.

Um ein Zurückrollen des Kraftfahrzeugs zu verhindern, sind verschiedene Vorrichtungen und Verfahren zur Realisierung einer so genannten Berghalte- oder Hillholder-Funktion vorgeschlagen worden. Eine bekannte Möglichkeit zur Realisierung einer Hillholder-Funktion besteht in einem aktiven Bremseingriff, also in einer aktiven Betätigung der Betriebsbremse. Hierzu wird zum Beispiel beim Anfahren am Berg der Bremsdruck der Betriebsbremse nach dem Loslassen des Bremspedals zunächst aufrecht erhalten und danach zeitabhängig oder in Abhängigkeit anderer aktueller Betriebsparameter abgebaut. Die Schwierigkeit besteht dabei jedoch in der exakten Koordinierung zwischen der Steuerung des Lastschaltgetriebes und der Betriebsbremse. Wird nämlich der Druck der Betriebsbremse zu lange hoch gehalten, kommt es zu einem unnötigen Bremsenverschleiß, einem erhöhten Kraftstoffverbrauch und einem unkomfortablen Anfahrruck. Wird der Druck der Betriebsbremse dagegen zu gering gehalten, so kommt es dennoch zu einem unerwünschten Zurückrollen des Fahrzeugs. Im Übrigen ist die steuerungstechnische Einbindung einer derartigen Hillholder-Funktion aufgrund anderer mit einem Bremseingriff arbeitenden Funktionen, wie ABS, ASR und ESP, schwierig und aufwendig.

Eine weitere bekannte Möglichkeit zur Realisierung einer Hillholder-Funktion besteht in der Herstellung einer die Ausgangswelle blockierenden Verspannung innerhalb des Lastschaltgetriebes. Hierzu ist es erforderlich, dass zur Standabkoppelung des Antriebsmotors ein dem eingelegten Gang zugeordnetes eingangsseitig angeordnetes Schaltelement zumindest teilweise geöffnet wird. Zur Rollverhinderung des Kraftfahrzeugs wird dann ein mit einem dem eingelegten Gang zugeordneten, ausgangsseitig angeordneten zweiten Schaltelement und der Ausgangswelle in Triebverbindung stehendes drittes Schaltelement geschlossen. Eine entsprechende Steuerungsvorrichtung ist beispielsweise in der EP 0 841 505 A1 beschrieben. In der DE 103 47 714 A1, in der auch weitere Druckschriften über Vorrichtungen und Verfahren zur Steuerung einer derartigen Hillholder-Funktion angegeben sind, wird ein Verfahren vorgeschlagen, gemäß dem die Funktion der Standabkoppelung und/oder des Hillholders in Abhängigkeit von einer dynamischen Rad- oder Achslastveränderung des Kraftfahrzeugs gesteuert oder geregelt wird.

Eine entsprechende Hillholder-Funktion, die ein festes Blockieren der Ausgangswelle des Lastschaltgetriebes vorsieht, ist jedoch im Hinblick auf die

Funktionssicherheit als kritisch zu beurteilen, da diese bei Auftreten einer elektronischen oder hydraulischen Störung nicht mehr zur Verfügung steht. Bei einem Anhalten und Wiederanfahren am Berg könnte das betreffende Kraftfahrzeug somit plötzlich unkontrolliert zurückrollen, da eine zum Halten des Kraftfahrzeugs ausreichende Bremsbetätigung im Normalfall, also bei funktionierendem Hillholder, nicht erforderlich ist und deshalb von einem Fahrer üblicherweise auch nicht vorgenommen wird. Ein mit einer derartigen Hillholder-Funktion versehenes Lastschaltgetriebe müsste daher entweder mit einer redundanten Steuerungsvorrichtung ausgerüstet werden, die entsprechend aufwendig und teuer wäre, oder in eine niedrigere Sicherheitsklasse eingestuft werden, welches eine Verwendung in Kraftfahrzeugen ausschließen würde, die, wie z.B. Omnibusse und Tanklastwagen, für den Transport von Personen oder Gefahrgut vorgesehen sind.

In der gattungsbildenden DE 102 39 392 A1 wird ein Verfahren zum Steuern eines Kraftfahrzeug-Automatgetriebes mit einem Anfahrelement und mehreren Schaltelementen beschrieben, bei dem ein über ein erstes Schaltelement übertragenes Antriebsmoment eines Antriebsmotors bei einer aktivierten Kupplungsschlupffunktion reduziert ist und dabei das erste Schaltelement in einem zumindest annähernd geöffneten Zustand gesteuert oder geregelt gehalten wird. Bei aktivierter oder angeforderter Kupplungsschlupffunktion wird ein zweites Schaltelement zur Generierung eines einem Aufnahmemoment des Anfahrelementes äquivalenten Reaktionsmomentes am Abtrieb des Automatgetriebes derart in einem zumindest annähernd geschlossenen Zustand gesteuert oder geregelt gehalten, dass am Abtrieb des Automatgetriebes ein gegen ein Bergabrollen entgegen einer angeforderten Bewegungsrichtung des Kraftfahrzeuges wirkendes Bremsmoment ansteht, wobei ein drittes Schaltelement geschlossen ist und das zweite Schaltelement in Abhängigkeit einer Fahrzeugneigung angesteuert wird.

Die DE 198 49 494 C1 offenbart ein Verfahren zur Einstellung der Geschwindigkeit eines Kraftfahrzeugs in einem Beinahe-Stillstand. Um die Sicherheit im Fahrzeugstillstand bzw. Quasi-Stillstand bei noch laufendem Motor zu erhöhen, wird die über das Getriebe des Kraftfahrzeugs eingestellte Soll-Bewegungsrichtung und die tatsächliche Ist-Bewegungsrichtung des Fahrzeugs ermittelt, die Ist-Bewegungsrichtung mit der Soll-Bewegungsrichtung verglichen und bei einer Abweichung der Ist-Bewegungsrichtung von der Soll-Bewegungsrichtung die Fahrzeuggeschwindigkeit ermittelt. Weiterhin wird die Bewegung des Fahrzeugs entgegen der eingestellten Soll-Bewegungsrichtung beibehalten, die Fahrzeuggeschwindigkeit jedoch auf einen Höchstwert begrenzt.

Der Erfindung liegt daher die Aufgabe zugrunde, ein Verfahren zur Steuerung eines automatisierten Lastschaltgetriebes der eingangs genannten Art anzugeben, mit dem ein Fahrer bei einem Fahrzeughalt und beim Anfahren bei aktivierter Standabkoppelung wirksam unterstützt wird, und das keinen zusätzlichen apparativen Aufwand im Kraftfahrzeug erfordert. Die Aufgabe wird erfindungsgemäß durch die Merkmale des Anspruchs 1 gelöst.

Somit kann bei der Beendigung der Standabkoppelung, die zumeist durch ein entsprechendes Signal beim Loslassen des Bremspedals ausgelöst wird und bei der die Wirkung der Betriebsbremse relativ schnell abnimmt, wogegen das wirksame Schließen des zur Standabkoppelung zumindest teilweise geöffneten ersten Schaltelementes ca. 1 Sekunde in Anspruch nimmt, ein Zurückrollen des Kraftfahrzeugs in dieser Zeit vermieden werden.

Durch diese kurzzeitige Erhöhung des auf die Ausgangswelle des Lastschaltgetriebes wirksamen Bremsmomentes wird ein Wegrollen des Kraftfahrzeugs, insbesondere ein gefährliches Zurückrollen, beim Betätigungswechsel von dem Bremspedal auf das Fahrpedal auch an einer steileren Steigungs- oder Gefällstrecke stark verzögert, so dass die dabei zurückgelegte Rollstrecke sowie die dabei erreichte Rollgeschwindigkeit klein und somit unkritisch sind.

Vorteilhafte sowie zweckmäßige Ausgestaltungen und Weiterbildungen des erfindungsgemäßen Verfahrens sind Gegenstand der abhängigen Ansprüche.

Der Erfindung liegt die Erkenntnis zu Grunde, dass die mit dem vollständigen Schließen des dritten Schaltelementes verbundenen Nachteile vermieden werden können, indem das dritte Schaltelement nur teilweise geschlossen wird. Hierdurch wird durch die Verspannung der betreffenden, ausgangsseitig angeordneten Getriebebauteile nur ein begrenztes Bremsmoment erzeugt, das auf die Ausgangswelle wirksam ist und damit ein mögliches Wegrollen des Kraftfahrzeugs bremst und damit verzögert, jedoch nicht verhindert. Aufgrund der zumeist vorhandenen Übersetzung zwischen dem mit dem dritten Schaltelement verbundenen Getriebebauteil und der Ausgangswelle sind das in dem dritten Schaltelement eingestellte Bremsmoment und das durch die Verspannung der Getriebebauteile auf die Ausgangswelle wirksame Bremsmoment zwar unterschiedlich groß, jedoch proportional zueinander.

Wegen des in dieser Situation begrenzten Bremsmomentes wird der Fahrer bei der Verhinderung eines Wegrollens des Kraftfahrzeugs nur unterstützt, jedoch nicht dazu verleitet, auf eine Betätigung der Betriebsbremse zu verzichten. Da es sich bei der erfindungsgemäßen Funktion, die auch als Hilislipper-Funktion bezeichnet werden kann, im Gegensatz zu den bekannten Hillholder-Funktionen nicht um eine Standbremsfunktion handelt, ist ein entsprechend ausgerüstetes Lastschaltgetriebe in eine höhere Sicherheitsklasse eingestuft und kann auch in Kraftfahrzeugen eingesetzt werden, die für den Transport von Personen oder von Gefahrgut vorgesehenen sind. Da aufgrund der Funktionsweise keine Redundanz vorhanden sein muss, ist kein zusätzlicher apparativer Aufwand erforderlich. Die erfindungsgemäße Hillslipper-Funktion ist demzufolge in einem konventionellen Lastschaltgetriebe alleine durch die Installierung einer entsprechenden Steuerungssoftware integrierbar.

In einem relativ einfachen Steuerungsvorgang kann das durch einen entsprechenden Schließgrad des dritten Schaltelementes erzeugte, auf die Ausgangswelle des Lastschaltgetriebes wirksame Bremsmoment auf einen vorab bestimmten Anfangswert eingestellt werden und nachfolgend die Höhe des Bremsmomentes während der Standabkoppelung konstant gehalten werden.

Alternativ dazu ist es jedoch auch möglich, dass das über das dritte Schaltelement erzeugte Bremsmoment zunächst auf den vorab bestimmten Anfangswert eingestellt wird, und dass die Höhe des Bremsmomentes nachfolgend während der Standabkoppelung in Abhängigkeit von mindestens eines während der Standabkoppelung ermittelten aktuellen Betriebsparameters geregelt wird.

Der vorab bestimmte Anfangswert des Bremsmomentes, der durch das Schließen des dritten Schaltelementes zumindest am Beginn der Standabkoppelung eingestellt wird, wird bevorzugt in Abhängigkeit von mindestens einem vor der Standabkoppelung ermittelten äußeren Betriebsparameter festgelegt, der das Wegrollverhalten des Kraftfahrzeugs wesentlich beeinflusst.

Demzufolge wird vorteilhaft vor der Standabkoppelung die aktuelle Fahrzeugmasse oder die aktuelle Zuladung des Kraftfahrzeugs ermittelt, und der Anfangswert des Bremsmomentes in Abhängigkeit von der aktuellen Fahrzeugmasse oder der aktuellen Zuladung bestimmt. Dies erfolgt bevorzugt derart, dass ein gegenüber einem vorab festgelegten Standardmoment erhöhtes Bremsmoment als Anfangswert des Bremsmomentes bestimmt wird, wenn die aktuelle Fahrzeugmasse eine vorab festgelegte Referenzmasse oder die aktuelle Zuladung eine vorab festgelegte Referenzzuladung überschreitet, und dass ein gegenüber dem Standardmoment verringertes Bremsmoment als Anfangswert des Bremsmomentes bestimmt wird, wenn die aktuelle Fahrzeugmasse die Referenzmasse oder die aktuelle Zuladung die Referenzzuladung unterschreitet.

Zusätzlich oder alternativ dazu kann hierzu auch vor der Standabkoppelung die aktuelle Fahrbahnneigung ermittelt der Anfangswert des Bremsmomentes in Abhängigkeit von der aktuellen Fahrbahnneigung bestimmt werden. Dies erfolgt bevorzugt derart, dass ein gegenüber dem vorab festgelegten Standardmoment erhöhtes Bremsmoment als Anfangswert des Bremsmomentes bestimmt wird, wenn die aktuelle Fahrbahnneigung eine vorab festgelegte Referenzsteigung überschreitet, und dass ein gegenüber dem Standardmoment verringertes Bremsmoment als Anfangswert des Bremsmomentes bestimmt wird, wenn die aktuelle Fahrbahnneigung die Referenzsteigung unterschreitet. Wird dagegen eine in die gewählte, durch die eingelegte Fahrstufe (D oder R) festgelegte Fahrtrichtung abfallenden Fahrbahnneigung ermittelt, so wird das Schließen des dritten Schaltelementes vorteilhaft unterlassen, da das Kraftfahrzeug nur in die ohnehin gewünschte Fahrtrichtung anrollen kann.

In einer dazu alternativen Ausführungsform des erfindungsgemäßen Verfahrens ist dagegen vorgesehen, dass das über das dritte Schaltelement erzeugte Bremsmoment zunächst auf einen niedrigen Tastwert eingestellt wird, der so gewählt ist, dass auch bei geringer Fahrbahnneigung ein Anrollen des Kraftfahrzeugs zu erwarten ist. Daraufhin wird die aktuelle Rollrichtung und die aktuelle Rollgeschwindigkeit des Kraftfahrzeugs ermittelt, und nachfolgend das erzeugte Bremsmoment auf einen Anfangswert eingestellt, der in Abhängigkeit von der aktuellen Rollrichtung und der aktuellen Rollgeschwindigkeit bestimmt wird.

Hierzu wird bevorzugt bei einer Ermittlung eines Zurückrollens (v_{R} < 0) ein vorab festgelegtes Standardmoment als Anfangswert des Bremsmomentes bestimmt, wenn die aktuelle Rollgeschwindigkeit weitgehend einer vorab festgelegten Referenzrollgeschwindigkeit entspricht (v_{R} ≈ v_{R_Ref}), ein gegenüber dem Standard moment erhöhtes Bremsmoment als Anfangswert des Bremsmomentes bestimmt, wenn die aktuelle Rollgeschwindigkeit die Referenzrollgeschwindigkeit überschreitet (|v_{R}| > |v_{R}-_{Ref}|), und ein gegenüber dem Standardmoment verringertes Bremsmoment als Anfangswert des Bremsmomentes bestimmt, wenn die aktuelle Rollgeschwindigkeit die Referenzrollgeschwindigkeit unterschreitet (|v_{R}| < |v_{R_Ref}|)_{.}

Wird dagegen ein Fahrzeugstillstand (v_{R} ≈ 0) oder ein Vorrollen des Kraftfahrzeugs (v_{R} > 0), also ein Rollen in die durch die eingelegte Fahrstufe (D oder R) festgelegte Fahrtrichtung, ermittelt, so wird das erzeugte Bremsmoment bevorzugt durch ein vollständiges Öffnen des dritten Schaltelementes aufgehoben, da ein Abbremsen der Ausgangswelle und damit des Kraftfahrzeugs aufgrund des vorliegenden Fahrzeugstillstands oder eines vorliegenden Anrollens in die gewählte Fahrtrichtung nicht erforderlich bzw. nicht sinnvoll erscheint. Das weitere Halten oder Anfahren des Kraftfahrzeugs kann der Fahrer über eine entsprechende Betätigung des Bremspedals oder des Fahrpedals steuern.

Nachdem durch das teilweise Schließen des dritten Schaltelementes bewirkten Einstellen des Anfangswertes des auf die Ausgangswelle des Lastschaltgetriebes wirksamen Bremsmomentes wird bevorzugt während der Standabkoppelung die aktuelle Bewegungsrichtung und die aktuelle Rollgeschwindigkeit des Kraftfahrzeugs ermittelt, und die Höhe des Bremsmomentes in Abhängigkeit von der aktuellen Bewegungsrichtung und der aktuellen Rollgeschwindigkeit geregelt.

Hierzu ist bevorzugt vorgesehen, dass bei einer Ermittlung eines Fahrzeugstillstands (v_{R} ≈ 0) das erzeugte Bremsmoment durch ein kontinuierliches oder stufenweises Öffnen des dritten Schaltelementes solange reduziert wird, bis eine Rollgeschwindigkeit ungleich Null (v_{R} ≠ 0) ermittelt wird.

Bei einer Ermittlung eines Zurückrollens (v_{R} < 0) ist sinnvoll vorgesehen, dass das erzeugte Bremsmoment erhöht wird, wenn die aktuelle Rollgeschwindigkeit eine vorab festgelegte Referenzrollgeschwindigkeit überschreitet (|v_{R}| > |v_{R_Ref}|), und dass das erzeugte Bremsmoment verringert wird, wenn die aktuelle Rollgeschwindigkeit die Referenzrollgeschwindigkeit unterschreitet (|v_{R}| < |v_{R_Ref}|).

Wird dagegen ein Vorrollen des Kraftfahrzeugs (v_{R} > 0), also ein Rollen in die durch die eingelegte Fahrstufe (D oder R) festgelegte Fahrtrichtung ermittelt, so wird zweckmäßig das erzeugte Bremsmoment durch ein vollständiges Öffnen des dritten Schaltelementes aufgehoben, da das Kraftfahrzeug bereits in die gewählte Fahrtrichtung anrollt und eine Behinderung dieser Anrollbewegung nicht sinnvoll erscheint. Das weitere Anfahren des Kraftfahrzeugs kann der Fahrer über eine entsprechende Betätigung des Bremspedals oder des Fahrpedals steuern.

Die Öffnungsgeschwindigkeit des dritten Schaltelementes ist im Allgemeinen auf die Betriebseigenschaften der Schaltelemente des Lastschaltgetriebes und des Drehmomentwandlers abgestimmt.

Hierzu kann z.B. vorgesehen sein, dass die aktuelle Stellung eines Leistungsstellgliedes, wie des Fahrpedals, einer Drosselklappe oder eines Mengenteilers einer Einspritzpumpe ermittelt wird, und dass bei einer ermittelten Stellung des Leistungsstellgliedes, die einer gegenüber einer mittleren Leistung erhöhten Leistung entspricht, die Öffnungsgeschwindigkeit des dritten Schaltelementes erhöht wird und bei einer ermittelten Stellung des Leistungsstellglie-des, die einer gegenüber der mittleren Leistung verringerten Leistung entspricht, die Öffnungsgeschwindigkeit des dritten Schaltelementes verringert wird.

Auch bei einem Wechsel der Fahrstufe (D, R) während der aktivierten Standabkoppelung wird das dritte Schaltelement vorteilhaft kurzzeitig weiter soweit geschlossen, dass durch das in dem Schaltelement eingestellte erhöhte Bremsmoment ein auf die Ausgangswelle wirksames Bremsmoment erzeugt wird, das unterhalb eines möglichen Maximalbremsmomentes liegt und derart bemessen ist, dass ein Bergabrollen des Kraftfahrzeugs ohne die Betätigung einer Fahrzeugbremse stärker gebremst wird, und dass das erzeugte Bremsmoment unmittelbar nachfolgend durch ein teilweises Öffnen des dritten Schaltelementes wieder auf den Ausgangswert reduziert. Hierdurch kann, ähnlich wie bei dem vorbeschriebenen Anfahren aus der Standabkoppelung, auch beim Wechsel zwischen Vorwärtsfahrt, also eingelegter Fahrstufe D, und Rückwärtsfahrt, also eingelegter Fahrstufe R, ein unter Umständen erhebliches Wegrollen des Kraftfahrzeugs zuverlässig verhindert werden.

Zur Verdeutlichung der Erfindung ist der Beschreibung eine Zeichnung beigefügt. In diesen zeigt
- Fig. 1: die Funktionsweise einer bevorzugten Ausführungsform eines erfindungsgemäßen Verfahrens anhand eines mehrteiligen Diagramms mit den Zeitverläufen von relevanten Sensorsignalen und Steuerungsgrößen,
- Fig. 2: einen schematischen Aufbau eines automatisierten Lastschaltgetriebes zur beispielhaften Anwendung des erfindungsgemäßen Verfahrens, und
- Fig. 3: das Schaltschema des Lastschaltgetriebes gemäß Fig. 3.

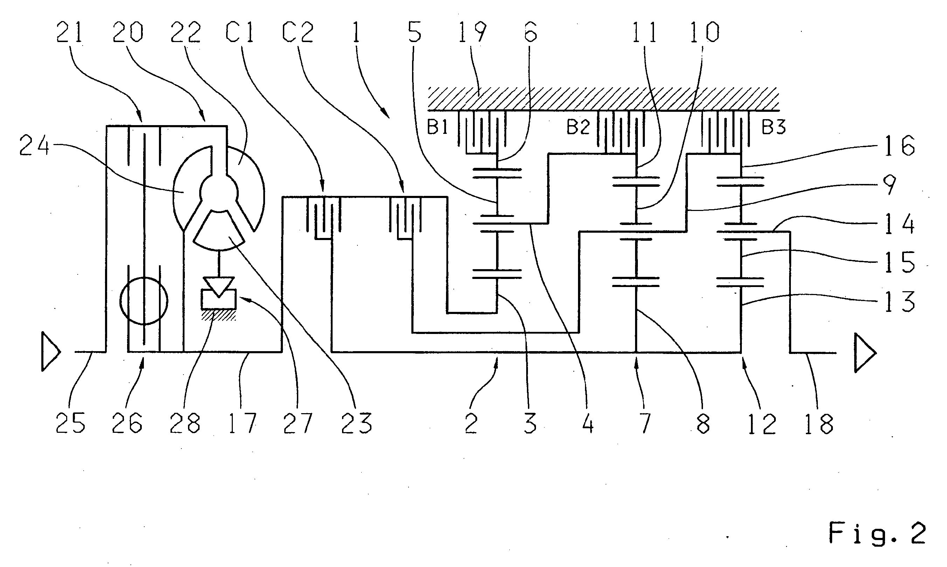

In Fig. 2 ist der schematische Aufbau eines an sich bekannten Lastschaltgetriebes 1 abgebildet, das vorliegend beispielhaft zur Erläuterung des erfindungsgemäßen Verfahrens verwendet wird. Das Lastschaltgetriebe 1 ist als Planetengetriebe ausgebildet und weist drei miteinander gekoppelte Planetensätze 2, 7 und 12 auf, die jeweils aus einem Sonnenrad 3, 8, 13, einem Planetenträger 4, 9, 14 und einem Hohlrad 6, 11, 16 bestehen. Auf den Planetenträgern 4, 9, 14 sind jeweils mehrere umfangsseitig verteilt angeordnete Planetenräder 5, 10, 15 drehbar gelagert, die einerseits jeweils mit dem zugeordneten Sonnenrad 3, 8, 13 und andererseits jeweils mit dem zugeordneten Hohlrad 6, 11, 16 in Verzahnungseingriff sind. Die Eingangswelle 17 des Lastschaltgetriebes 1 ist drehfest mit dem Sonnenrad 3 des ersten Planetenradsatzes 2 verbunden. Der Planetenträger 4 des ersten Planetenträgers 4 ist drehfest mit dem Hohlrad 11 des zweiten Planetenradsatzes 7 gekoppelt, und der Planetenträger 9 des zweiten Planetenradsatzes 7 ist drehfest mit dem Hohlrad 16 des dritten Planetenradsatzes 12 verbunden. Außerdem ist der Planetenträger 14 des dritten Planetenradsatzes 12 drehfest mit der Ausgangswelle 18 des Lastschaltgetriebes 1 verbunden, die mit einem Achsantrieb einer angetriebenen Fahrzeugachse, wie einem Achsdifferenzial oder einem Verteilergetriebe, in Verbindung steht.

Das Lastschaltgetriebe 1 weist fünf reibschlüssig wirksame Schaltelemente, nämlich zwei Schaltkupplungen C1, C2 und drei Schaltbremsen B1, B2, B3 auf, die zur Schaltung von drei Fahrstufen, also einer Rückwärtsfahrstufe R, einer Neutralfahrstufe N und einer Vorwärtsfahrstufe D, sowie innerhalb der Vorwärtsfahrstufe D von sechs Vorwärtsgängen G1, G2, G3, G4, G5, G6 und innerhalb der Rückwärtsfahrstufe R eines Rückwärtsgangs R dienen.

Durch das Schließen der ersten Schaltkupplung C1 wird die Eingangswelle 17 mit dem Sonnenrad 8 des zweiten Planetenradsatzes 7 und dem Sonnenrad 13 des dritten Planetenradsatzes 12 verbunden. Mittels der zweiten Schaltkupplung C2 ist die Eingangswelle 17 mit dem Planetenträger 9 des zweiten Planetenradsatzes 7 und dem Hohlrad 16 des dritten Planetenradsatzes 12 verbindbar. Durch das Schließen der ersten Schaltbremse B1 wird das Hohlrad 6 des ersten Planetenradsatzes 2 gegenüber einem Gehäuse 19 festgebremst. Mittels der zweiten Schaltbremse B2 sind der Planetenträger 4 des ersten Planetenradsatzes 2 und das Hohlrad 11 des zweiten Planetenradsatzes 7 gegenüber dem Gehäuse 19 arretierbar. Durch das Schließen der dritten Schaltbremse B3 wird der Planetenträger 9 des zweiten Planetenradsatzes 7 und das Hohlrad 16 des dritten Planetenradsatzes 12 gegenüber dem Gehäuse 19 festgelegt.

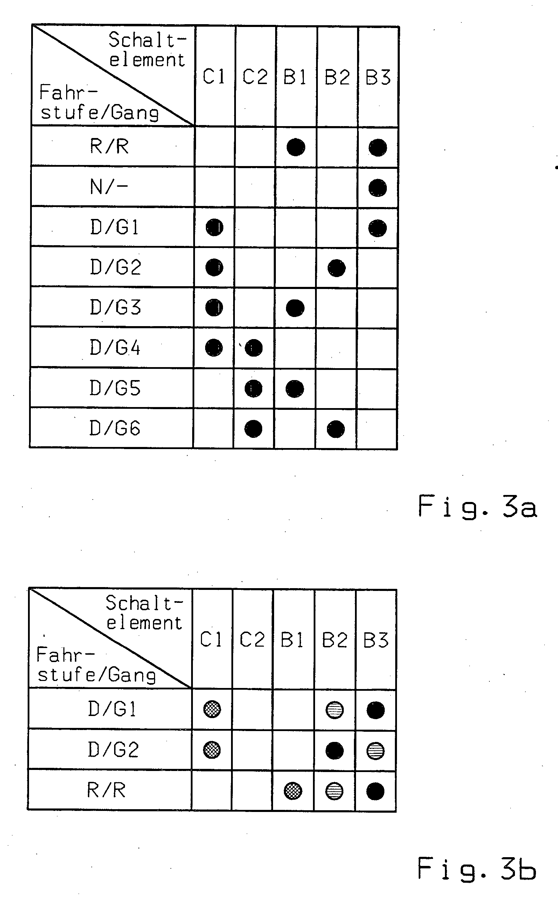

Das Schaltschema dieses Lastschaltgetriebes 1 ist in der Tabelle von Fig. 3a angegeben, wobei die bei der eingelegten Fahrstufe R, N, D und dem eingelegten Gang G1 bis G6 bzw. R jeweils geschlossenen Schaltelemente durch ein ausgefülltes Kreissymbol dargestellt sind. Aus dem Aufbau des Lastschaltgetriebes 1 und der Anordnung der Schaltelemente C1, C2, B1, B2, B3 ergibt sich, dass zur Schaltung der Gänge G1 bis G6 und R jeweils nur zwei Schaltelemente geschlossen werden müssen, und dass zum Wechsel zwischen zwei benachbarten Gängen, z.B. bei einer Schaltung von dem ersten Gang G1 in den zweiten Gang G2, jeweils nur ein Schaltelement geöffnet und nur ein Schaltelement geschlossen werden muss.

Eingangsseitig ist dem Lastschaltgetriebe 1 ein mit einer Überbrückungskupplung 21 versehener hydrodynamischer Drehmomentwandler 20 antriebstechnisch vorgelagert. Der Drehmomentwandler 20 umfasst ein Pumpenrad 22, ein Leitrad 23 und ein Turbinenrad 24 sowie ein nicht dargestelltes Gehäuse. Das Pumpenrad 22 ist starr mit einer Eingangswelle 25 verbunden, die mit der Antriebswelle eines nicht abgebildeten Antriebsmotors in Verbindung steht, und die bedarfsweise über die Überbrückungskupplung 21 und einen Drehschwingungsdämpfer 26 mit der Eingangswelle 17 des Lastschaltgetriebes 1 verbindbar ist. Das Leitrad 23 steht über eine Freilaufkupplung 27 mit einem Gehäuseteil 28 in Verbindung, wodurch eine Drehung des Leitrades 23 entgegen der Drehrichtung des Antriebsmotors verhindert wird. Das Turbinenrad 24 ist drehfest mit der Eingangswelle 17 des Lastschaltgetriebes 1 verbunden.

Bei hoher Drehzahldifferenz zwischen dem Pumpenrad 22 und dem Turbinenrad 24, die insbesondere bei Fahrzeugstillstand, also bei festgebremstem Turbinenrad 24 auftritt, ist ohne weitere Maßnahmen das an dem Turbinenrad 24 bzw. der Eingangswelle 17 des Lastschaltgetriebes anliegende Drehmoment gegenüber dem an dem Pumpenrad 22 anliegenden, von dem Antriebsmotor aufzubringenden Drehmoment in etwa um den Faktor 2,5 erhöht und als so genanntes Kriechmoment wirksam.

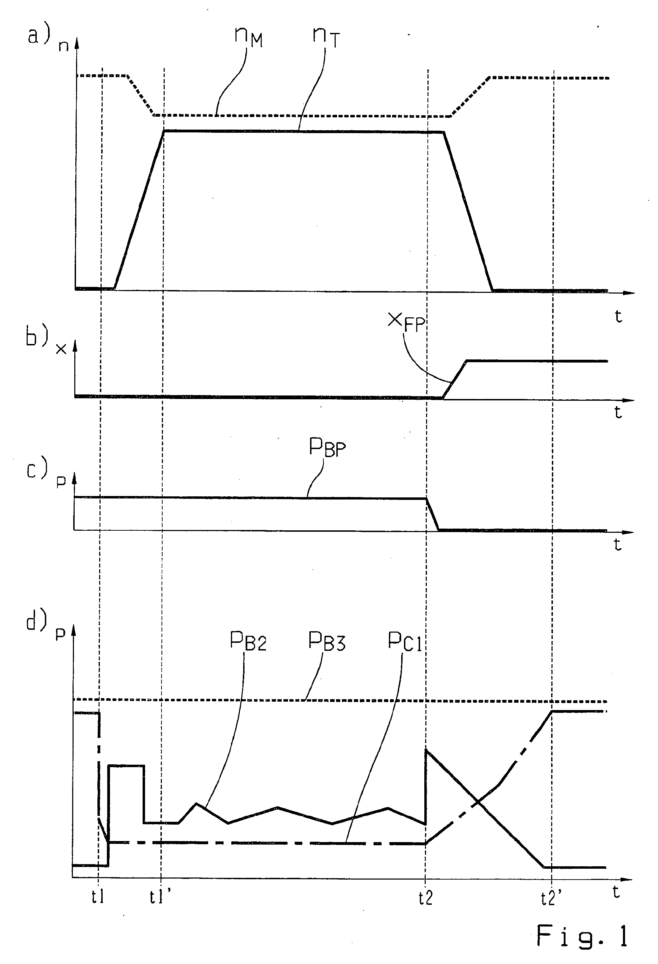

In dem mehrteiligen Diagramm der Fig. 1 ist anhand der Zeitverläufe einiger Signale die an sich bekannte Standabkoppelung des Antriebsmotors und die während der Standabkoppelung ablaufende erfindungsgemäße Hillslipper-Funktion zur Unterstützung des Fahrers bei einer Verhinderung eines ungewollten Zurückrollens des Kraftfahrzeugs veranschaulicht.

Im oberen Teil a) des Diagramms der Fig. 1 sind der Drehzahlverlauf n_{M} des Antriebsmotors (Motordrehzahl) und der Drehzahlverlauf n_{T} des Turbinenrades 24 (Turbinendrehzahl) dargestellt. In Teil b) des Diagramms ist der Zeitverlauf eines Lastsignals, hier in Form der Fahrpedalstellung x_{FP}, und in Teil c) der zeitlich Verlauf eines Bremssignals, hier in Form des über das Bremspedal erzeugten Bremsdruckes p_{BP} der Betriebsbremse dargestellt. In Teil d) des Diagramms sind beispielhaft die Zeitverläufe der Stelldrücke p_{C1}, p_{B2}, p_{B3} der Schaltelemente C1, B2 und B3 des Lastschaltgetriebes 1 gezeigt.

Bei dem mit Hilfe der Fig.1 zu erläuternden Verfahrensablauf wird zum einen zu Grunde gelegt, dass bei Fahrzeugstillstand oder geringer Rollgeschwindigkeit und eingelegter Vorwärtsfahrstufe D automatisch der erste Gang G1 eingelegt wird, und dass nachfolgend in diesem Gang angefahren wird. Zudem wird davon ausgegangen, dass die Schaltelemente C1, C2, B1, B2, B3 des Lastschaltgetriebes als Lamellenkupplungen ausgebildet sind, die über zugeordnete Stellzylinder hydraulisch betätigbar sind, so dass der jeweilige Stelldruck p_{C1}, p_{C2}, p_{B1}, p_{B2}, p_{B3} ein Maß für den Einrückungsgrad bzw. Ausrückungsgrad des betreffenden Schaltelementes und für die Höhe des erzeugten Kupplung- bzw. Bremsmomentes bildet.

Die Aktivierung der Standabkoppelung des Antriebsmotors und der erfindungsgemäßen Hillslipper-Funktion beginnt zum Zeitpunkt t1, zu dem das Fahrpedal losgelassen ist (x_{FP} = 0), das Bremspedal betätigt ist (p_{BP} > 0), also das Kraftfahrzeug über die Betriebsbremse gebremst oder gehalten wird, aufgrund der vollständig geschlossenen Schaltelemente C1, B3 der erste Gang G1 eingelegt ist (siehe Drücke p_{C1} und p_{B3}), und die nicht dargestellte Rollgeschwindigkeit v_{R} des Kraftfahrzeugs einen Wert gleich Null oder nahe Null erreicht.

Ab diesem Zeitpunkt t1 wird zur Standabkoppelung des Antriebsmotors das eingangsseitig angeordnete Schaltkupplung C1 durch eine Reduzierung des Stelldrucks PC1 zumindest teilweise geöffnet und nachfolgend schlupfend betrieben. Hierdurch sinkt das über das Lastschaltgetriebe 1 übertragene Drehmoment ab, wodurch die Turbinendrehzahl n_{T} in die Nähe der auf die Leerlaufdrehzahl absinkenden Motordrehzahl n_{M} ansteigt.

Zudem wird die ausgangsseitig angeordnete Schaltbremse B2, die über die Elemente des zweiten Planetenradsatzes 7 und des dritten Planetenradsatzes 12 mit der geschlossenen Schaltbremse B3 und der Ausgangswelle 18 in Triebverbindung steht, soweit geschlossen, dass durch das in dem Schaltelement B2 eingestellte Bremsmoment eine Verspannung der beiden Planetenradsätze 7 und 12 hervorgerufen wird, die sich als ein auf die Ausgangswelle 18 wirksames Bremsmoment auswirkt. Dadurch wird das ein Bergabrollen des Kraftfahrzeugs ohne eine Betätigung der Betriebsbremse zwar gebremst bzw. verzögert, jedoch nicht komplett verhindert.

Nach dem Öffnen der Schaltkupplung C1 und dem Schließen der Schaltbremse B2 stellt sich ab dem Zeitpunkt t1' ein quasi-stationärer Zustand ein, in dem beide Schaltelemente C1 und B2 schlupfend betrieben werden. Dabei wird das zu Anfang über die Höhe des Stelldruckes p_{B2} eingestellte Bremsmoment vorteilhaft in Abhängigkeit äußerer Betriebsparameter, wie z.B. der zuvor ermittelten Fahrzeugmasse und/oder der zuvor ermittelten Fahrbahnsteigung, bestimmt und nachfolgend in Abhängigkeit ermittelter aktueller Betriebsparameter, wie insbesondere der Höhe der aktuellen Rückrollgeschwindigkeit (v_{R} < 0), geregelt.

Zur vollständigen Vermeidung eines Zurückrollens des Kraftfahrzeugs während der Standabkoppelung muss der Fahrer die Betriebsbremse immer ausreichend betätigen. Er wird hierbei durch die erfindungsgemäße Hillslipper-Funktion zwar optimal unterstützt, jedoch nicht vollständig entlastet. Eine unzureichende Betätigung der Betriebsbremse und ein für den Fahrer überraschend auftretendes Zurückrollen des Kraftfahrzeugs sind damit weitgehend ausgeschlossen.

Mit dem Loslassen des Bremspedals (p_{BP} = 0) zum Zeitpunkt t2 wird die Beendigung der Standabkoppelung eingeleitet. Demzufolge wird das die Standabkoppelung steuernde Schaltelement C1 durch Anheben des Stelldrucks PC1 nachfolgend in Abhängigkeit von der Fahrpedalstellung XFP wieder geschlossen, was zum Abfallen der Turbinendrehzahl n_{T} führt. Ebenso nimmt die Motordrehzahl n_{M} in Abhängigkeit von der Fahrpedalstellung x_{FP} zu.

Zugleich wird zum Zeitpunkt t2 das die Hillslipper-Funktion steuernde Schaltelement B2 durch Anheben des Stelldrucks PB2 kurzzeitig weiter geschlossen, wodurch das auf die Ausgangswelle 18 des Lastschaltgetriebes 1 wirksame Bremsmoment für einen kurzen Zeitraum erhöht wird, um ein stärkeres Zurückrollen aufgrund des losgelassenen Bremspedals (p_{BP} = 0) zu verhindern.

Nachfolgend wird die Schaltbremse B2 durch Absenken des Stelldrucks p_{B2} wieder vollständig geöffnet, wobei die Öffnungsgeschwindigkeit, also der Druckgradient d/dt p_{B2}, zweckmäßig in Abhängigkeit von der Fahrpedalstellung x_{FP} sowie der Richtung und Höhe der Rückrollgeschwindigkeit v_{R} gesteuert wird. Zum Zeitpunkt t2' sind durch das vollständige Schließen der Schaltkupplung C1 die Standabkoppelung des Antriebsmotors sowie durch das vollständige Öffnen der Schaltbremse B2 die Hillslipper-Funktion beendet. Anschließend erfolgt ein Anfahrvorgang.

Da ein Anfahren nicht nur vorwärts mit eingelegtem erstem Gang G1, sondern z.B. bei geringer Zuladung und geringer Fahrbahnsteigung auch mit dem zweiten Gang G2 und auch rückwärts mit eingelegtem Rückwärtsgang R möglich ist, sind in der Tabelle der Fig. 3b die für Standabkoppelung und die Hillslipper-Funktion relevanten Schaltelemente C1, C2, B1, B2, B3 für die betreffenden Gänge G1, G2, R angegeben. Dabei ist das für die Steuerung der Standabkoppelung des Antriebsmotors zumindest teilweise geöffnete Schaltelement jeweils durch ein kreuzschraffiertes Kreissymbol, das vollständig geschlossen gehaltene Schaltelement jeweils durch ein vollständig ausgefülltes Kreissymbol und das für die Steuerung der Hillslipper-Funktion teilweise geschlossene Schaltelement durch ein horizontal schraffiertes Kreissymbol markiert. Demnach wird zur Steuerung der Standabkoppelung für ein anschließendes Anfahren im ersten Gang G1 das Schaltelement C1 teilweise geöffnet und das Schaltelement B3 ganz geschlossen. Zur Steuerung der Standabkoppelung für ein anschließendes Anfahren im zweiten Gang G2 wird das Schaltelement C1 teilweise geöffnet und das Schaltelement B2 ganz geschlossen. Dagegen ist zur Steuerung der Standabkoppelung für ein anschließendes Anfahren im Rückwärtsgang R das Schaltelement B1 teilweise geöffnet und das Schaltelement B3 ganz geschlossen. Zur Realisierung der Hillslipper-Funktion werden die jeweiligen weiteren Schaltelemente B2 oder B3 teilweise geschlossen, also schlupfend betrieben.

Die erfindungsgemäße Hillslipper-Funktion stellt demzufolge eine vorteilhafte Unterstützung eines Fahrers beim Verhindern eines unerwünscht starken Zurückrollens eines Kraftfahrzeugs dar und ist in moderne Lastschaltgetriebe ohne einen zusätzlichen apparativen Aufwand alleine durch die Installierung einer entsprechenden Steuerungssoftware integrierbar.

### Bezugszeichen

- 1: Lastschaltgetriebe
- 2: Erster Planetenradsatz
- 3: Sonnenrad
- 4: Planetenträger
- 5: Planetenrad
- 6: Hohlrad
- 7: Zweiter Planetenradsatz
- 8: Sonnenrad
- 9: Planetenträger
- 10: Planetenrad
- 11: Hohlrad
- 12: Dritter Planetenradsatz
- 13: Sonnenrad
- 14: Planetenträger
- 15: Planetenrad
- 16: Hohlrad
- 17: Eingangswelle
- 18: Ausgangswelle
- 19: Gehäuse
- 20: Drehmomentwandler
- 21: Überbrückungskupplung
- 22: Pumpenrad
- 23: Leitrad
- 24: Turbinenrad
- 25: Eingangswelle
- 26: Schwingungsdämpfer
- 27: Freilaufkupplung
- 28: Gehäuseteil
- B1: Schaltelement, Schaltbremse
- B2: Schaltelement, Schaltbremse
- B3: Schaltelement, Schaltbremse
- C1: Schaltelement, Schaltkupplung
- C2: Schaltelement, Schaltkupplung
- D: Vorwärts-Fahrstufe
- G1: Erster Vorwärts-Gang
- G2: Zweiter Vorwärts-Gang
- G3: Dritter Vorwärts-)Gang
- G4: Vierter Vorwärts-Gang
- G5: Fünfter Vorwärts-Gang
- G6: Sechster Vorwärts-Gang
- m_{Fzg}: Fahrzeugmasse
- m_{Ref}: Referenzmasse
- n: Drehzahl
- n_{M}: Motordrehzahl
- n_{T}: Turbinendrehzahl
- p: Druck
- p_{BP}: Bremsdruck
- p_{B1}: Stelldruck von B1
- p_{B2}: Stelldruck von B2
- p_{B3}: Stelldruck von B3
- p_{C1}: Stelldruck von C1
- p_{C2}: Stelldruck von C2
- N: Neutral-Fahrstufe
- R: Rückwärts-Fahrstufe, Rückwärtsgang
- t: Zeit
- t1: Zeitpunkt
- t1': Zeitpunkt
- t2: Zeitpunkt
- t2': Zeitpunkt
- v_{R}: Rollgeschwindigkeit
- v_{R_Ref}: Referenzrollgeschwindigkeit
- x: Stellweg
- x_{FP}: Fahrpedalstellung

## Patentansprüche

1. Verfahren zur Steuerung eines automatisierten Lastschaltgetriebes, das im Antriebsstrang eines Kraftfahrzeugs zwischen einem Antriebsmotor und einem Achsantrieb angeordnet ist, dessen Eingangswelle (17) über einen hydrodynamischen Drehmomentwandler (20) mit der Antriebswelle des Antriebsmotors und dessen Ausgangswelle (18) über eine Abtriebswelle mit dem Achsantrieb in Triebverbindung steht, und das mehrere Gänge (G1 - G6, R) aufweist, die jeweils durch das selektive Schließen von mindestens zwei von mehreren reibschlüssig wirksamen Schaltelementen (C1, C2, B1, B2, B3) schaltbar sind, wobei zur Standabkoppelung des Antriebsmotors ein dem momentan eingelegten Gang (G1) zugeordnetes, eingangsseitig angeordnetes erstes Schaltelement (C1) zumindest teilweise geöffnet wird, und zur Rollverhinderung des Kraftfahrzeugs ein mit einem dem eingelegten Gang (G1) zugeordneten, ausgangsseitig angeordneten zweiten Schaltelement (B3) und der Ausgangswelle (18) in Triebverbindung stehendes drittes Schaltelement (B2) geschlossen wird, **dadurch gekennzeichnet, dass** das dritte Schalt-element (B2) zu Beginn der Standabkoppelung (t1) soweit geschlossen wird, dass durch das in dem Schaltelement (B2) eingestellte Bremsmoment (p_{B2}) ein auf die Ausgangswelle (18) wirksames Bremsmoment (p_{B2}) erzeugt wird, das unterhalb eines möglichen Maximalbremsmomentes liegt und derart bemessen ist, dass ein Bergabrollen des Kraftfahrzeugs ohne die Betätigung einer Fahrzeugbremse nur gebremst wird; und dass das dritte Schaltelement (B2) mit der Beendigung der Standabkoppelung kurzzeitig soweit geschlossen wird, dass durch das in dem Schaltelement (B2) eingestellte erhöhte Bremsmoment (p_{B2}) ein auf die Ausgangswelle (18) wirksames Bremsmoment (p_{B2}) erzeugt wird, das unterhalb eines möglichen Maximalbremsmomentes liegt und derart bemessen ist, dass ein Bergabrollen des Kraftfahrzeug ohne die Betätigung einer Fahrzeugbremse stärker gebremst wird, und dass das erzeugte Bremsmoment (p_{B2}) nachfolgend durch ein vollständiges Öffnen des dritten Schaltelementes (B2) aufgehoben wird, wobei mindestens ein aktueller Betriebsparameter ermittelt, und die Öffnungsgeschwindigkeit (d/dt p_{B2}) des dritten Schaltelementes (B2) in Abhängigkeit des aktuellen Betriebsparameters gesteuert wird, und dass die aktuelle Bewegungsrichtung und die aktuelle Rollgeschwindigkeit (v_{R}) des Kraftfahrzeugs ermittelt wird, und dass bei einem ermittelten Zurückrollen des Kraftfahrzeugs (v_{R} < 0) mit hoher Rollgeschwindigkeit die Öffnungsgeschwindigkeit (d/dt p_{B2}) des dritten Schaltelementes (B2) verringert wird und bei einem ermittelten Zurückrollen des Kraftfahrzeugs (v_{R} < 0) mit geringer Rollgeschwindigkeit oder bei einem ermittelten Vorrollen des Kraftfahrzeugs (v_{R} > 0) die Öffnungsgeschwindigkeit (d/dt p_{B2}) des dritten Schaltelementes (B2) erhöht wird.

2. Verfahren nach Anspruch 1, **dadurch gekennzeichnet, dass** das über das dritte Schaltelement (B2) erzeugte Bremsmoment (p_{B2}) auf einen vorab bestimmten Anfangswert eingestellt wird, und dass die Höhe des Bremsmomentes (p_{B2}) während der Standabkoppelung konstant gehalten wird.

3. Verfahren nach Anspruch 1, **dadurch gekennzeichnet, dass** das über das dritte Schaltelement (B2) erzeugte Bremsmoment (p_{B2}) zunächst auf einen vorab bestimmten Anfangswert eingestellt wird, und dass die Höhe des Bremsmomentes (p_{B2}) während der Standabkoppelung in Abhängigkeit von mindestens eines während der Standabkoppelung ermittelten aktuellen Betriebsparameters geregelt wird.

4. Verfahren nach Anspruch 2 oder 3, **dadurch gekennzeichnet, dass** der vorab bestimmte Anfangswert des Bremsmomentes (p_{B2}) in Abhängigkeit von mindestens eines vor der Standabkoppelung ermittelten äußeren Betriebsparameters festgelegt wird.

5. Verfahren nach Anspruch 4, **dadurch gekennzeichnet, dass** vor der Standabkoppelung die aktuelle Fahrzeugmasse (m_{Fzg}) oder die aktuelle Zuladung des Kraftfahrzeugs ermittelt wird, und dass der Anfangswert des Bremsmomentes (p_{B2}) in Abhängigkeit der aktuellen Fahrzeugmasse (m_{Fzg}) oder der aktuellen Zuladung bestimmt wird.

6. Verfahren nach Anspruch 4 oder 5, **dadurch gekennzeichnet, dass** vor der Standabkoppelung die aktuelle Fahrbahnneigung ermittelt wird, und dass der Anfangswert des Bremsmomentes (p_{B2}) in Abhängigkeit von der aktuellen Fahrbahnneigung bestimmt wird.

7. Verfahren nach Anspruch 6, **dadurch gekennzeichnet, dass** bei einer Ermittlung einer in die gewählte Fahrtrichtung abfallenden Fahrbahnneigung das Schließen des dritten Schaltelementes (B2) unterlassen wird.

8. Verfahren nach Anspruch 2 oder 3, **dadurch gekennzeichnet, dass** das über das dritte Schaltelement (B2) erzeugte Bremsmoment (p_{B2}) zunächst auf einen niedrigen Tastwert eingestellt wird, dass daraufhin die aktuelle Rollrichtung und die aktuelle Rollgeschwindigkeit (v_{R}) des Kraftfahrzeugs ermittelt wird, und dass nachfolgend das erzeugte Bremsmoment (p_{B2}) auf einen Anfangswert eingestellt wird, der in Abhängigkeit von der aktuellen Rollrichtung und der aktuellen Rollgeschwindigkeit (v_{R}) bestimmt wird.

9. Verfahren nach Anspruch 8, **dadurch gekennzeichnet, dass** bei einer Ermittlung eines Fahrzeugstillstands (v_{R} ≈ 0) oder eines Vorrollens des Kraftfahrzeugs (v_{R} > 0) das erzeugte Bremsmoment (p_{B2}) durch ein vollständiges Öffnen des dritten Schaltelementes (B2) aufgehoben wird.

10. Verfahren nach zumindest einem der Ansprüche 3 bis 9, **dadurch gekennzeichnet, dass** während der Standabkoppelung die aktuelle Bewegungsrichtung und die aktuelle Rollgeschwindigkeit (v_{R}) des Kraftfahrzeugs ermittelt wird, und dass die Höhe des Bremsmomentes (p_{B2}) in Abhängigkeit von der aktuellen Bewegungsrichtung und der aktuellen Rollgeschwindigkeit (v_{R}) geregelt wird.

11. Verfahren nach Anspruch 10, **dadurch gekennzeichnet, dass** bei einer Ermittlung eines Fahrzeugstillstands (v_{R} ≈ 0) das erzeugte Bremsmoment (p_{B2}) durch ein kontinuierliches oder stufenweises Öffnen des dritten Schaltelementes (B2) solange reduziert wird, bis eine Rollgeschwindigkeit mit einem Wert von ungleich Null (v_{R} ≠ 0) ermittelt wird.

12. Verfahren nach Anspruch 1, **dadurch gekennzeichnet, dass** die aktuelle Stellung eines Leistungsstellgliedes (x_{FP}) ermittelt wird, und dass bei einer ermittelten Stellung des Leistungsstellgliedes (x_{FP}), die einer gegenüber einer mittleren Leistung erhöhten Leistung entspricht, die Öffnungsgeschwindigkeit (d/dt p_{B2}) des dritten Schaltelementes (B2) erhöht wird und bei einer ermittelten Stellung des Leistungsstellgliedes (x_{FP}), die einer gegenüber der mittleren Leistung verringerten Leistung entspricht, die Öffnungsgeschwindigkeit (d/dt p_{B2}) des dritten Schaltelementes (B2) verringert wird.

13. Verfahren nach zumindest einem der Ansprüche 1 bis 12, **dadurch gekennzeichnet, dass** bei einem Wechsel der Fahrstufe (R, D) während der aktivierten Standabkoppelung das dritte Schaltelement (B2) kurzzeitig soweit geschlossen wird, dass durch das in dem Schaltelement (B2) eingestellte erhöhte Bremsmoment (p_{B2}) ein auf die Ausgangswelle (18) wirksames Bremsmoment (p_{B2}) erzeugt wird, welches unterhalb eines möglichen Maximalbremsmomentes liegt und derart bemessen ist, dass ein Bergabrollen des Kraftfahrzeugs ohne die Betätigung einer Fahrzeugbremse stärker gebremst wird, und dass das erzeugte Bremsmoment (p_{B2}) unmittelbar nachfolgend durch ein teilweises Öffnen des dritten Schaltelementes (B2) wieder auf den Ausgangswert reduziert wird.

## Claims

1. Method for controlling an automated power shift transmission which is arranged in the drive train of a motor vehicle between a drive engine and an axle drive whose input shaft (17) has a drive connection via a hydrodynamic torque converter (20) to the drive shaft of the drive engine, and whose output shaft (18) has a drive connection to the axle drive via an output shaft, and which has a plurality of gear speeds (G1-G6, R) which can each be shifted by the selective closing of at least two of a plurality of shift elements (C1, C2, B1, B2, B3) which are effective in a frictionally locking fashion, wherein for the purpose of decoupling in the stationary state of the drive engine a first shift element (C1) which is assigned to the instantaneously engaged gear speed (G1) and which is arranged on the input side is at least partially opened, and in order to prevent rolling of the motor vehicle a third shift element (B2) which has a drive connection to a second shift element (B3), assigned to the engaged gear speed (G1) and arranged on the output side, and which has a drive connection to the output shaft (18) is closed, **characterized in that** the third shift element (B2) is closed at the start of the decoupling (t1) in the stationary state to such an extent that the braking torque (p_{B2}) which is set in the shift element (B2) generates a braking torque (p_{B2}) which acts on the output shaft (18) and which is below a possible maximum braking torque and is dimensioned in such a way that downhill rolling of the motor vehicle without the activation of a vehicle brake is only braked; and **in that** the third shift element (B2) is briefly closed with the ending of the decoupling in the stationary state to such an extent that the increased braking torque (p_{B2}) which is set in the shift element (B2) generates a braking torque (p_{B2}) which acts on the output shaft (18) and which is below a possible maximum braking torque and is dimensioned in such a way that downhill rolling of the motor vehicle without the activation of a vehicle brake is braked to a greater extent, and **in that** the generated braking torque (p_{B2}) is subsequently cancelled through complete opening of the third shift element (B2), wherein at least one current operating parameter is determined and the opening speed (d/dt p_{B2}) of the third shift element (B2) is controlled as a function of the current operating parameter, and **in that** the current direction of movement and the current rolling speed (v_{R}) of the motor vehicle is determined, and **in that** when rolling back of the motor vehicle (v_{R} < 0) with a high rolling speed is determined the opening speed (d/dt p_{B2}) of the third shift element (B2) is reduced, and when rolling back of the motor vehicle (v_{R} < 0) with a low rolling speed is determined or when rolling forward of the motor vehicle (v_{R} > 0) is determined the opening speed (d/dt p_{B2}) of the third shift element (B2) is increased.

2. Method according to Claim 1, **characterized in that** the braking torque (p_{B2}) which is generated by means of the third shift element (B2) is set to a previously determined initial value, and **in that** the level of the braking torque (p_{B2}) is kept constant during the decoupling in the stationary state.

3. Method according to Claim 1, **characterized in that** the braking torque (p_{B2}) which is generated by means of the third shift element (B2) is firstly set to a previously determined initial value, and **in that** the level of the braking torque (p_{B2}) is regulated during the decoupling in a stationary state, as a function of at least one current operating parameter which is determined during the decoupling in the stationary state.

4. Method according to Claim 2 or 3, **characterized in that** the previously determined initial value of the braking torque (p_{B2}) is defined as a function of at least one external operating parameter which is determined before the decoupling in the stationary state.

5. Method according to Claim 4, **characterized in that** before the decoupling in the stationary state the current vehicle mass (m_{Veh}) or the current payload of the motor vehicle is determined, and **in that** the initial value of the braking torque (p_{B2}) is determined as a function of the current vehicle mass (m_{Veh}) or the current payload.

6. Method according to Claim 4 or 5, **characterized in that** before the decoupling in the stationary state the current inclination of the carriageway is determined, and **in that** the initial value of the braking torque (p_{B2}) is determined as a function of the current inclination of the carriageway.

7. Method according to Claim 6, **characterized in that** during the determination of an inclination of the carriageway which drops away in the selected direction of travel the closing of the third shift element (B2) is prohibited.

8. Method according to Claim 2 or 3, **characterized in that** the braking torque (p_{B2}) which is generated by means of the third shift element (B2) is firstly set to a low blanking value, **in that** subsequently the current rolling direction and the current rolling speed (v_{R}) of the motor vehicle are determined, and **in that** subsequently the generated braking torque (p_{B2}) is set to an initial value which is determined as a function of the current rolling direction and the current rolling speed (v_{R}).

9. Method according to Claim 8, **characterized in that** during the determination of a vehicle stationary state (v_{R} ≈ 0) or of forward rolling of the motor vehicle (v_{R} > 0) the generated braking torque (p_{B2}) is cancelled by completely opening the third shift element (B2).

10. Method according to at least one of Claims 3 to 9, **characterized in that** during the decoupling in the stationary state the current direction of movement and the current rolling speed (v_{R}) of the motor vehicle are determined, and **in that** the level of the braking torque (p_{B2}) is regulated as a function of the current direction of movement and the current rolling speed (v_{R}).

11. Method according to Claim 10, **characterized in that** during the determination of a vehicle stationary state (v_{R} ≈ 0) the generated braking torque (p_{B2}) is reduced by continuous or incremental opening of the third shift element (B2) until a rolling speed with a value unequal to zero (v_{R} ≠ 0) is determined.

12. Method according to Claim 1, **characterized in that** the current position of a power actuator element (x_{FP}) is determined, and **in that** when a position of the power actuator element (x_{FP}) which corresponds to a power which is increased compared to an average power is determined, the opening speed (d/dt p_{B2}) of the third shift element (B2) is increased, and when a position of the power actuator element (x_{FP}) which corresponds to a power which is reduced compared to the average power is determined, the opening speed (d/dt p_{B2}) of the third shift element (B2) is reduced.

13. Method according to at least one of Claims 1 to 12, **characterized in that** when the driving position (R, D) changes during the activated decoupling in the stationary state, the third shift element (B2) is briefly closed to such an extent that the increased braking torque (p_{B2}) which is set in the shift element (B2) generates a braking torque (p_{B2}) which acts on the output shaft (18) and which is below a possible maximum braking torque and is dimensioned in such a way that downhill rolling of the motor vehicle without the activation of a vehicle brake is braked more strongly, and **in that** the generated braking torque (p_{B2}) is directly afterwards reduced again to the initial value by partially opening the third shift element (B2).

## Revendications

1. Procédé de commande d'une boîte de vitesse automatisée à changement de rapports sous charge, qui est disposée dans la chaîne cinématique d'un véhicule automobile entre un moteur d'entraînement et une commande d'essieu, dont l'arbre d'entrée (17) est en liaison d'entraînement par le biais d'un convertisseur de couple hydrodynamique (20) avec l'arbre d'entraînement du moteur d'entraînement et dont l'arbre de sortie (18) est en liaison d'entraînement par le biais d'un arbre de prise de force avec la commande d'essieu, et qui présente plusieurs rapports (G1 - G6, R) qui peuvent être commutés à chaque fois par la fermeture sélective d'au moins deux éléments de commutation parmi plusieurs agissant par engagement par friction (C1, C2, B1, B2, B3), un premier élément de commutation (C1) disposé du côté de l'entrée, associé au rapport actuellement enclenché (G1), étant au moins partiellement ouvert pour le désaccouplement d'état du moteur d'entraînement, et pour empêcher un roulement du véhicule automobile, un troisième élément de commutation (B2) en liaison d'entraînement avec un deuxième élément de commutation (B3) disposé du côté de la sortie, associé au rapport enclenché (G1), et avec l'arbre de sortie (18) étant fermé, **caractérisé en ce que** le troisième élément de commutation (B2), au début du désaccouplement d'état (t1), est fermé dans une mesure telle qu'un couple de freinage (p_{B2}) agissant sur l'arbre de sortie (18) soit produit par le couple de freinage (p_{B2}) ajusté dans l'élément de commutation (B2), lequel couple de freinage est situé en dessous d'un couple de freinage maximal possible et est dimensionné de telle sorte qu'une descente en montagne du véhicule automobile soit seulement freinée sans l'actionnement d'un frein du véhicule; et **en ce que** le troisième élément de commutation (B2) est brièvement fermé à la fin du désaccouplement d'état dans une mesure telle qu'un couple de freinage (p_{B2}) agissant sur l'arbre de sortie (18) soit produit par le couple de freinage accru (p_{B2}) ajusté dans l'élément de commutation (B2), lequel couple de freinage est situé en dessous d'un couple de freinage maximal possible et est dimensionné de telle sorte qu'une descente en montagne du véhicule automobile soit plus fortement freinée sans l'actionnement d'un frein du véhicule, et **en ce que** le couple de freinage produit (p_{B2}) est ensuite supprimé par une ouverture complète du troisième élément de commutation (B2), au moins un paramètre de fonctionnement actuel étant déterminé, et la vitesse d'ouverture (d/dt p_{B2}) du troisième élément de commutation (B2) étant commandée en fonction du paramètre de fonctionnement actuel, et **en ce que** le sens de déplacement actuel et la vitesse de roulement actuelle (v_{R}) du véhicule automobile sont déterminés, et **en ce que** dans le cas d'un roulement en arrière déterminé du véhicule automobile (v_{R} < 0) avec une vitesse de roulement élevée, la vitesse d'ouverture (d/dt p_{B2}) du troisième élément de commutation (B2) est réduite, et dans le cas d'un roulement en arrière déterminé du véhicule automobile (v_{R} < 0) avec une faible vitesse de roulement, ou dans le cas d'un roulement en avant déterminé du véhicule automobile (v_{R} > 0), la vitesse d'ouverture (d/dt p_{B2}) du troisième élément de commutation (B2) est augmentée.

2. Procédé selon la revendication 1, **caractérisé en ce que** le couple de freinage (p_{B2}) produit par le biais du troisième élément de commutation (B2) est ajusté à une valeur initiale déterminée au préalable, et **en ce que** le niveau du couple de freinage (p_{B2}) est maintenu constant pendant le désaccouplement d'état.

3. Procédé selon la revendication 1, **caractérisé en ce que** le couple de freinage (p_{B2}) produit par le biais du troisième élément de commutation (B2) est d'abord ajusté à une valeur initiale déterminée au préalable, et **en ce que** le niveau du couple de freinage (p_{B2}) est réglé pendant le désaccouplement d'état en fonction d'au moins un paramètre de fonctionnement actuel déterminé pendant le désaccouplement d'état.

4. Procédé selon la revendication 2 ou 3, **caractérisé en ce que** la valeur initiale déterminée au préalable du couple de freinage (p_{B2}) est fixée en fonction d'au moins un paramètre de fonctionnement extérieur déterminé avant le désaccouplement d'état.

5. Procédé selon la revendication 4, **caractérisé en ce qu'**avant le désaccouplement d'état, la masse actuelle du véhicule (m_{Fzg}) ou la charge actuelle du véhicule automobile est déterminée, et **en ce que** la valeur initiale du couple de freinage (p_{B2}) est déterminée en fonction de la masse actuelle du véhicule (m_{Fzg}) ou de la charge actuelle.

6. Procédé selon la revendication 4 ou 5, **caractérisé en ce qu'**avant le désaccouplement d'état, la pente actuelle de la route est déterminée, et **en ce que** la valeur initiale du couple de freinage (p_{B2}) est déterminée en fonction de la pente actuelle de la route.

7. Procédé selon la revendication 6, **caractérisé en ce que** dans le cas d'une détermination d'une pente de la route descendant dans le sens de conduite choisi, la fermeture du troisième élément de commutation (B2) est omise.

8. Procédé selon la revendication 2 ou 3, **caractérisé en ce que** le couple de freinage (p_{B2}) produit par le biais du troisième élément de commutation (B2) est d'abord ajusté à une faible valeur de détection, **en ce qu'**ensuite le sens de roulement actuel et la vitesse de roulement actuelle (v_{R}) du véhicule automobile sont déterminés, et **en ce qu'**ensuite le couple de freinage (p_{B2}) produit est ajusté à une valeur initiale qui est déterminée en fonction du sens de roulement actuel et de la vitesse de roulement actuelle (v_{R}).

9. Procédé selon la revendication 8, **caractérisé en ce que** dans le cas d'une détermination d'un arrêt du véhicule (v_{R} ≈ 0) ou d'un roulement vers l'avant du véhicule automobile (v_{R} > 0), le couple de freinage (p_{B2}) produit est supprimé par une ouverture complète du troisième élément de commutation (B2).

10. Procédé selon au moins l'une quelconque des revendications 3 à 9, **caractérisé en ce que** pendant le désaccouplement d'état, le sens de déplacement actuel et la vitesse de roulement actuelle (v_{R}) du véhicule automobile sont déterminés, et **en ce que** le niveau du couple de freinage (p_{B2}) est réglé en fonction du sens de déplacement actuel et de la vitesse de roulement actuelle (v_{R}).

11. Procédé selon la revendication 10, **caractérisé en ce que** dans le cas d'une détermination d'un arrêt du véhicule (v_{R} ≈ 0), le couple de freinage (p_{B2}) produit est réduit par une ouverture continue ou incrémentale du troisième élément de commutation (B2) jusqu'à ce qu'une vitesse de roulement ayant une valeur différente de zéro (v_{R} ≠ 0) soit déterminée.

12. Procédé selon la revendication 1, **caractérisé en ce que** la position actuelle d'un organe de réglage de puissance (x_{FP}) est déterminée, et **en ce que** dans le cas d'une position déterminée de l'organe de réglage de puissance (x_{FP}) qui correspond à une puissance accrue par rapport à une puissance moyenne, la vitesse d'ouverture (d/dt p_{B2}) du troisième élément de commutation (B2) est augmentée, et dans le cas d'une position déterminée de l'organe de réglage de puissance (x_{FP}) qui correspond à une puissance réduite par rapport à la puissance moyenne, la vitesse d'ouverture (d/dt p_{B2}) du troisième élément de commutation (B2) est réduite.

13. Procédé selon au moins l'une quelconque des revendications 1 à 12, **caractérisé en ce que** dans le cas d'un changement des étages de conduite (R, D) pendant le désaccouplement d'état activé, le troisième élément de commutation (B2) est brièvement fermé dans une mesure telle qu'un couple de freinage (p_{B2}) agissant sur l'arbre de sortie (18) soit produit par le couple de freinage (p_{B2}) accru ajusté dans l'élément de commutation (B2), lequel couple de freinage est situé en dessous d'un couple de freinage maximal possible et est dimensionné de telle sorte qu'une descente en montagne du véhicule automobile soit plus fortement freinée sans l'actionnement d'un frein du véhicule, et **en ce que** le couple de freinage produit (p_{B2}) est ensuite immédiatement réduit à nouveau à la valeur initiale par une ouverture partielle du troisième élément de commutation (B2).
